(19) Europäisches Patentamt
European Patent Office
Office européen des brevets

(11) **EP 2 495 154 A1**

(12) **DEMANDE DE BREVET EUROPEEN**

(43) Date de publication:
**05.09.2012 Bulletin 2012/36**

(51) Int Cl.:
**B62D 5/00** (2006.01)

(21) Numéro de dépôt: **12157787.8**

(22) Date de dépôt: **01.03.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **02.03.2011 FR 1151686**

(71) Demandeur: **Akka Ingenierie Produit
92300 Levallois-Perret (FR)**

(72) Inventeurs:
• **Ricci, Maurice
69002 Lyon (FR)**
• **Guenole, Benoît
75011 Paris (FR)**
• **Galois, Olivier
78280 Guyancourt (FR)**

(74) Mandataire: **Gaillarde, Frédéric F. Ch. et al
Cabinet Germain et Maureau
8 avenue du Président Wilson
75116 Paris (FR)**

(54) **Système de direction du type steer-by-wire pour véhicule automobile**

(57) L'invention concerne un système de commande de direction découplée d'un véhicule automobile comprenant :
- un système (300) de restitution d'effort sur un organe de commande de direction (100) du véhicule comprenant au moins un moteur d'assistance (301) apte à restituer un couple à l'organe de commande de direction,
- des moyens de détermination d'une commande d'un conducteur du véhicule,
- des moyens de détermination d'une vitesse du véhicule et,
- des moyens de détermination d'une consigne de couple à restituer à l'organe de commande de direction (100), **caractérisé en ce qu'**il comprend, en outre, des moyens pour déterminer un premier couple à restituer à l'organe de commande de direction (100) en fonction d'efforts extérieurs exercés sur le véhicule et de la vitesse du véhicule et des moyens pour déterminer un second couple à restituer à l'organe de commande de direction (100) en fonction de la vitesse du véhicule et de la commande du conducteur, la consigne de couple à restituer à l'organe de commande de direction (100) étant fonction des premiers et second couples à restituer à l'organe de commande de direction (100).

Fig. 2

EP 2 495 154 A1

**Description**

La présente invention concerne un système de commande de direction découplée, communément désignée "Steer-by-wire" en termes anglo-saxons.

Elle concerne plus particulièrement un système de commande de braquage des roues directrices d'un véhicule ainsi qu'un système de restitution d'un effort sur un organe de commande de direction dudit véhicule et les procédés de commande associés.

L'invention trouve une application particulièrement avantageuse dans le domaine automobile.

De façon générale, dans un véhicule automobile équipé d'un système de commande de direction de type steer-by-wire, aucun lien mécanique n'est présent entre l'organe de commande des roues, à savoir le volant par exemple, et les roues directrices, le train de roues ne transmettant plus de sensation d'effort au conducteur du véhicule.

La traditionnelle colonne de direction est remplacée par des liaisons électriques à même de transmettre des ordres de commande générés à partir de la rotation du volant, à des actionneurs, généralement électriques, qui assurent un contrôle de l'angle de braquage des roues directrices.

On connaît notamment un système dans lequel la direction comprend un actionneur électrique par roue.

Ainsi, la position angulaire du volant est traduite par un signal de commande commandant plusieurs actionneurs agissant, chacun, sur une des roues directrices pour l'orienter dans la position de braquage correspondant à la position du volant voulue par le conducteur.

Or, les stratégies de commande liées au braquage des roues directrices ne sont, à ce jour, pas totalement satisfaisantes.

Nombre d'entre elles ne sont pas établies pour prendre en considération au mieux la dynamique du véhicule liée à l'indépendance de chacune des roues directrices et pour contrôler cette dynamique.

Certaines sont également mises en place soit sans statégie de contrôle de trajectoire du véhicule, induisant un risque de perte de contrôle du véhicule pour le conducteur soit en association avec une stratégie de contrôle complexe et/ou laborieuse à mettre en oeuvre.

Les stratégies de commande susmentionnées sont également inadaptées à la gestion de conduite liée à des volants dont le mouvement angulaire est limité par rapport aux volants classiques.

Il est ainsi nécessaire, à l'heure actuelle, dans ce type de système de commande de direction découplée, d'améliorer en permanence le confort de conduite pour le conducteur ainsi que la sécurité pour éviter au conducteur tout perte de contrôle du véhicule et lui offrir une bonne maitrise de son véhicule.

Par ailleurs, dans un système de commande de direction de type steer-by-wire, il est nécessaire de reproduire pour le conducteur les sensations de conduite indispensables à la bonne maîtrise d'un véhicule.

En effet, les sensations perçues par le conducteur par l'intermédiaire du volant ont une part capitale dans son aptitude à diriger son véhicule.

On connait, à ce jour, de nombreux systèmes de direction équipés d'un système de restitution d'effort qui a pour principale fonction de délivrer un retour de force sur le volant de telle manière que le conducteur ressente l'état de la route tel que le changement d'adhérence ou autres de la même manière qu'avec un système de direction de véhicule automobile de type mécanique.

Ce système de restitution d'effort simule ainsi les efforts qui seraient ressentis avec un système de direction mécanique classique.

Un tel système de restitution d'effort comprend, de façon classique, un actionneur qui fournit au conducteur un effort représentatif du comportement du véhicule et une unité de contrôle adaptée pour piloter l'actionneur et les commandes de ce dernier.

On constate que les systèmes de restitution d'effort, à l'heure actuelle, ne sont également pas totalement satisfaisants.

En effet, de nombreuses stratégies de commande de restitution d'effort au volant sont établies en s'affranchissant des caractéristiques de la route sur laquelle le véhicule circule, ce qui génère parfois, dans certaines conditions d'utilisation du véhicule, des efforts au volant inadaptés.

Ceci a une incidence sur la bonne maîtrise du véhicule par le conducteur et la sécurité.

Un but de la présente invention est de proposer un système de commande de direction découplée qui remédie aux inconvénients susmentionnés.

Plus particulièrement, un but de la présente invention est de proposer un système de commande de direction découplée adapté pour assurer le braquage de roues directrices d'un véhicule automobile présentant une stratégie de contrôle actif du braquage des roues et du comportement dynamique du véhicule, lié à l'indépendance des roues notamment.

Un autre but de la présente invention est de proposer un système de commande de direction découplée adapté pour assurer le braquage de roues directrices d'un véhicule automobile qui prévoit des moyens de prévention contre la perte du contrôle du véhicule par le conducteur.

Il est également désirable de proposer un système de commande de direction découplée adapté pour assurer le braquage de roues directrices d'un véhicule automobile pouvant être intégré dans un véhicule dans lequel le volant est à mouvement angulaire limité par rapport aux volants classiques.

Un autre but de la présente invention est de proposer un système de commande de direction découplée adapté pour restituer un effort à un organe de commande d'un véhicule qui optimise confort et sécurité de conduite pour le conducteur..

Il est notamment désirable de proposer un système tel que sumentionné qui améliore le ressenti de la dynamique du véhicule par le conducteur tout en conservant un confort de conduite correct.

Un autre but de la présente invention est de proposer un système de commande de direction découplée adapté pour restituer un effort à un organe de commande d'un véhicule simple et pratique à mettre en oeuvre, quelque soit le véhicule.

A cet effet, la présente invention propose un système de commande de direction découplée d'un véhicule automobile comprenant :

- un système de restitution d'effort sur un organe de commande de direction du véhicule comprenant au moins un moteur d'assistance apte à restituer un couple à l'organe de commande de direction,
- des moyens de détermination d'une commande d'un conducteur du véhicule,
- des moyens de détermination d'une vitesse du véhicule et,
- des moyens de détermination d'une consigne de couple à restituer à l'organe de commande de direction,

remarquable en ce qu'il comprend, en outre, des moyens pour déterminer un premier couple à restituer à l'organe de commande de direction en fonction d'efforts extérieurs exercés sur le véhicule et de la vitesse du véhicule et des moyens pour déterminer un second couple à restituer à l'organe de commande de direction en fonction de la vitesse du véhicule et de la commande du conducteur, la consigne de couple à restituer à l'organe de commande de direction étant fonction des premiers et second couples à restituer à l'organe de commande de direction.

Selon des modes particuliers de réalisation de l'invention, le système peut comprendre une ou plusieurs des caractéristiques suivantes, prises isolément ou en combinaison techniquement possibles :

- il comprend, en outre, un système de commande de braquage de roues directrices du véhicule doté d'un actionneur individuel par roue directrice ;
- les moyens pour déterminer un premier couple à restituer à l'organe de commande de direction en fonction d'efforts extérieurs appliqués sur le véhicule et de la vitesse du véhicule comprennent des moyens de détermination d'efforts extérieurs exercés sur chaque roue directrice, efforts propres à chacune desdites roues ;
- les moyens pour déterminer un second couple à restituer à l'organe de commande de direction en fonction de la vitesse du véhicule et de la commande du conducteur comprennent des moyens de détermination d'une consigne de position propre à chacun des actionneurs dédié à une roue directrice et des moyens de comparaison desdites consignes de position avec des positions effectives de moteurs de chaque actionneur ;
- le système de restitution d'effort sur l'organe de commande de direction du véhicule comprend des moyens d'asservissement du moteur d'assistance dudit organe en fonction de la consigne de couple à restituer à l'organe de commande de direction ;
- le système comprend des moyens adaptés pour restituer une valeur seuil de couple prédéterminée à l'organe de commande de direction lorsque la consigne de couple à restituer est supérieure à ladite valeur seuil de couple ;
- il comprend un organe de commande de direction du véhicule comprenant :
- un corps central,
- deux branches de préhension reliées à ce corps central, disposées de part et d'autre de celui-ci,
- au moins une palette d'accélération reliée à la face arrière dudit corps et s'étendant entre ce corps et l'une desdites branches, cette palette étant telle qu'une traction vers le conducteur permette de faire accélérer le véhicule, et
- au moins un moyen de freinage disposé sur la face avant d'au moins l'une desdites branches, ce moyen de freinage étant tel qu'une pression exercée par le conducteur permette de freiner le véhicule,

lesdites branches de préhension, ladite palette et ledit moyen de freinage étant disposés de manière que lorsque le conducteur tient lesdites branches avec ses mains, il ait au moins l'un de ses pouces qui vienne se positionner naturellement sur ledit moyen de freinage, et ses autres doigts sur la face arrière de ladite palette.

L'invention concerne également un procédé de mise en oeuvre d'un système de commande de direction découplée tel que précité dans lequel :

- on détermine un premier couple à restituer à l'organe de commande de direction en fonction d'efforts extérieurs appliqués sur le véhicule et de la vitesse du véhicule,

EP 2 495 154 A1

- on détermine un second couple à restituer à l'organe de commande de direction en fonction de la vitesse du véhicule et de la commande du conducteur,
- on génère une consigne de couple à restituer à l'organe de commande de direction fonction des premiers et seconds couples à restituer à l'organe de commande de direction.

Selon des modes particuliers de réalisation de l'invention, le procédé peut comprendre la caractéristique suivante :

- une étape dans laquelle on choisit une valeur de couple seuil à restituer à l'organe de commande de direction, on compare ladite valeur seuil à la valeur de la consigne de couple générée et si la valeur de la consigne de couple générée est supérieure à la valeur de couple seuil, on restitue au moteur d'assistance le couple seuil.

L'invention concerne, en outre, un véhicule automobile comprenant au moins une roue directrice et un système de commande de direction découplée tel que précité.

L'invention sera davantage comprise à la lecture de la description non limitative qui va suivre, faite en référence aux figures ci-annexées :

- la figure 1 est une représentation en perspective d'un mode de réalisation d'un organe de commande d'un véhicule automobile ;
- la figure 2 est un diagramme fonctionnel d'un système de commande de direction découplée selon la présente invention;
- les figures 3a et 3b sont des vues en perspective d'une partie d'un système de restitution d'effort à un organe de commande d'un véhicule d'un système de commande de direction découplée selon la présente invention respectivement avant et après retrait d'un logement dudit système de restitution d'effort;
- la figure 4a est une vue en perspective d'un système de commande de braquage d'un système de commande de direction découplée selon la présente invention dans lequel les deux roues directrices sont commandées de façon indépendante.
- la figure 4b est une vue en perspective agrandie de la zone A de la figure 4a;
- les figures 5a et 5b sont des cartographies permettant de déterminer un couple d'effort à appliquer à un organe de commande d'un véhicule en fonction d'une vitesse du véhicule et d'un angle appliqué audit organe de commande du véhicule.

Dans ce qui suit, de façon conventionnelle, l'axe X représente l'axe longitudinal de roulement du véhicule, l'axe Y représente l'axe transversal du véhicule, et l'axe Z représente l'axe vertical du véhicule.

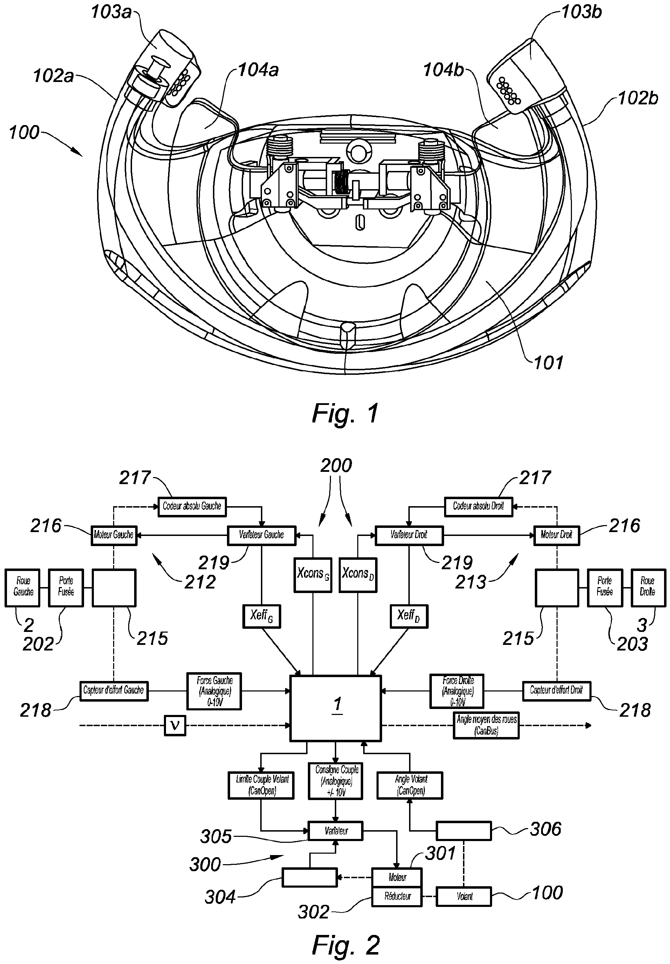

En référence à la figure 2, on observe un schéma fonctionnel d'un système de commande de direction découplée de type « Steer by wire » d'un véhicule automobile.

Ce système comprend, de façon générale, un organe de commande de direction 100 tel qu'un volant destiné à être commandé par un conducteur, un système de commande de braquage 200 des roues directrices du véhicule adapté pour orienter les roues en fonction d'une position du volant 100 choisie par le conducteur et notamment mais non exclusivement de la position angulaire de ce dernier.

Un mode de réalisation particulier d'un volant sera décrit plus loin en relation avec la figure 1.

Le système de commande de direction découplée comprend, en outre, un système de restitution d'efforts au volant 300 et une électronique de commande 1 permettant de mettre en oeuvre les deux systèmes respectifs de commande de braquage 200 et de restitution d'efforts au volant 300.

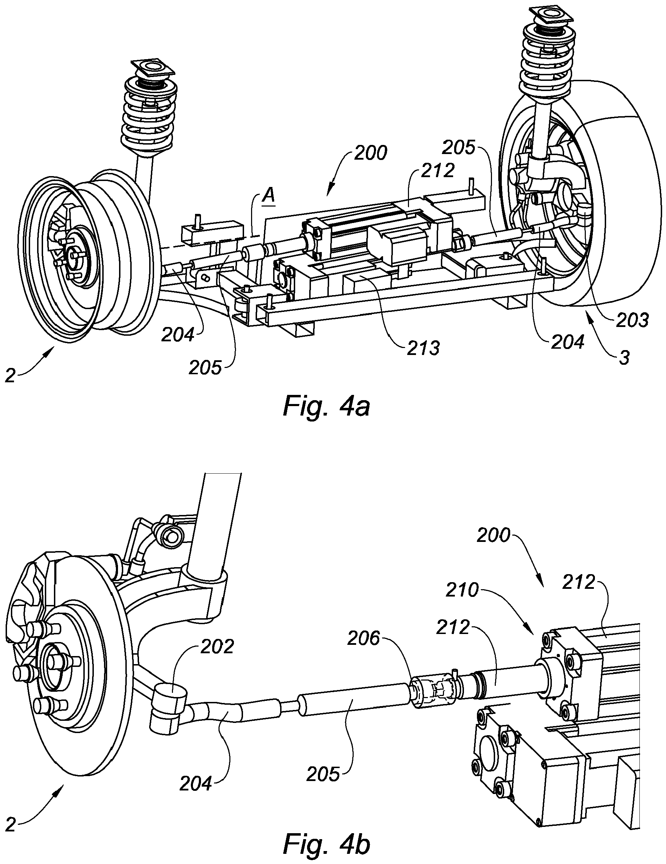

Concernant le système 200 de commande de braquage des roues directrices, comme illustré sur les figures 2, 4a et 4b, ce dernier est adapté pour assurer le braquage des roues directrices 2 et 3 du véhicule.

Chaque roue 2,3 est montée sur un porte moyeu 202,203 monté pivotant sur une première biellette 204 de commande d'orientation reliée elle même par l'intermédiaire d'une seconde biellette 205 à un actionneur 210.

Avantageusement, les roues directrices 2,3 sont commandées de façon indépendante, ce qui signifie que chaque roue directrice 2,3 est commandée par un actionneur 212, 213 individuel dédié.

Chaque actionneur 212,213 commande l'orientation de la roue directrice 2,3 qui lui est associée, en exerçant son action sur le porte moyeu 202, 203 correspondant.

Comme illustré sur la figure 4a ou 4b, les biellettes de commande d'orientation 204,205 s'étendent longitudinalement selon l'axe Y du véhicule tout comme l'actionneur correspondant 212,213.

De plus, la seconde biellette 205 de commande d'orientation est montée par une liaison de type rotule 206 avec l'arbre de sortie 214 de l'actionneur 212,213 correspondant.

Pour chacune des roues 2,3, l'ensemble formé par l'actionneur 212,213 et les biellettes 204,205 est également incliné relativement à l'axe Y du véhicule. On peut citer comme exemple d'inclinaison une inclinaison de l'ordre de quatre

4

degrés.

Pour les deux roues directives d'un train avant et/ou celles d'un train arrière arrière, pour favoriser un gain de place du système de commande de braquage, les deux actionneurs 212,213 des deux roues 2,3 d'un train sont superposés. Les inclinaisons des ensembles biellettes-actionneur 212,213 correspondant sont alors inversées, comme illustrée sur la figure 4a.

Concernant les actionneurs 212,213, ils sont, de préférence, des actionneurs électriques.

Comme illustré sur la figure 2, chaque actionneur 212, 213 peut comprendre un vérin 215 entrainé en translation par moteur électrique 216, les premières et secondes biellettes de commande de direction 204,205 étant adaptées pour transformer le mouvement de translation du vérin 215 correspondant en mouvement de rotation du porte moyeu 202,203 de la roue 2,3 correspondante.

Le système 200 de commande de braquage des roues 2,3 directrices comprend, en outre, un ou plusieurs capteurs 217 adaptés pour mesurer une information sur le déplacement de chaque moteur 216.

On peut citer ainsi comme information, la position et/ou la vitesse du moteur 216 associé à l'actionneur 215.

De préférence, il est placé sur l'axe du rotor du moteur 216 et est adapté pour déterminer la variation de l'angle de rotation du moteur 216 correspondant.

Dans un exemple non limitatif, un tel capteur 217 peut être un codeur absolu.

Dans une variante de réalisation, le système 200 de commande de braquage des roues 2,3 directrices pourra comprendre un capteur adapté pour mesurer une information sur le déplacement de l'actionneur. On peut ainsi citer les capteurs adaptés pour mesurer directement en sortie de vérin 215 les déplacements en position du vérin 215.

Le système 200 de commande de braquage des roues 2,3 directrices comprend, en outre, pour chacune des roues directrices 2,3, un capteur d'effort 218 adapté pour mesurer l'effort appliqué sur le vérin 215 correspondant.

Par ailleurs, chaque moteur 216 est couplé à des moyens adaptés pour commander et asservir si nécessaire le moteur correspondant.

Ces moyens comprennent, de façon non limitative, un variateur de vitesse 219 adapté pour commander la vitesse du moteur 216 de sorte d'assurer par l'application d'une consigne de couple au rotor du moteur 216.

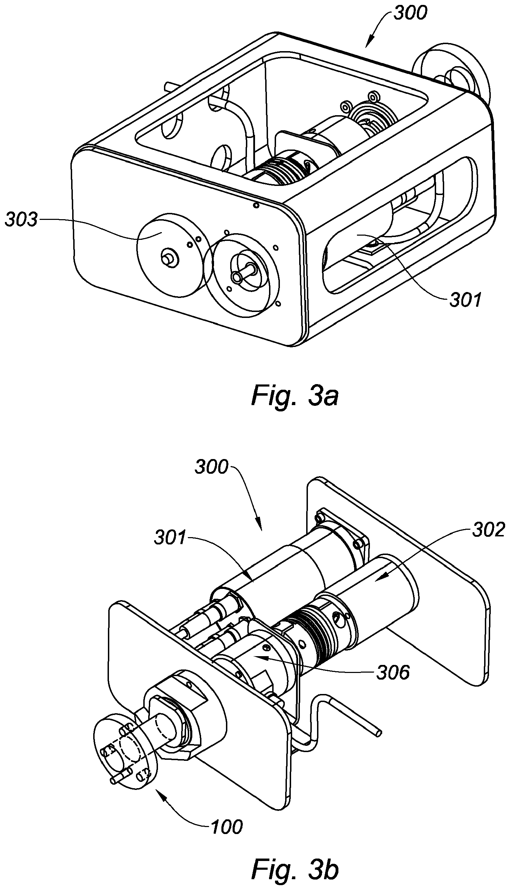

Concernant le système de restitution d'effort 300 sur le volant 100, comme illustré sur les figures 2, 3a et 3b, ce dernier est adapté pour transmettre un retour de force sur le volant 100 de telle manière que le conducteur ressente l'état de la route et ainsi remplacer toute liaison mécanique entre le volant 100 et le train de roue d'un direction classique.

Un tel système 300 comprend, ainsi, un moteur électrique d'assistance 301 dont l'arbre de sortie est relié à un réducteur 302 par l'intermédiaire d'un engrenage 303 ou tout autre moyen de transmission adapté.

Ce réducteur 302 est couplé au volant 100 et adapté pour délivrer un couple particulier à ce dernier.

L'arbre de sortie du réducteur 302 est en prise avec un arbre d'entraînement du volant 100.

Ledit système peut comprendre, en outre, un ou plusieurs capteurs 304 adaptés pour mesurer une information proportionnelle au déplacement du moteur.

On peut citer, ainsi des capteurs 304 mesurant la variation angulaire du moteur 301. Dans un exemple non limitatif, un tel capteur est un codeur incrémental. Il est ainsi lié mécaniquement à l'arbre de sortie du moteur 301.

Par ailleurs, chaque capteur 304 et chaque moteur 301 sont reliés à des moyens 305 adaptés pour commander et asservir si nécessaire le moteur 301 correspondant.

Ces moyens 305 peuvent comprendre, comme précédemment avec le système de braquage des roues 200, un variateur, adapté pour assurer une commande en position angulaire du moteur du volant en fonction de consigne de couple reçue, cette position angulaire définissant le couple que le moteur 301 restitue au volant 100 et au conducteur.

Un tel système 300 comprend, également, un ou plusieurs capteurs 306 adaptés pour mesurer la position angulaire du volant 100.

De tels capteurs 306 peuvent être, par exemple, des codeurs absolus placés directement sur l'arbre de sortie du réducteur 302.

Concernant l'organe de commande du véhicule 100, il peut être de tout type tel qu'un volant classique.

Un mode de réalisation particulier et non limitatif de volant est illustré sur la figure 1.

De façon générale, ce volant 100 comprend un corps central 101 qui peut comporter en son centre un tableau de bord (non illustré) affichant des informations utiles pour la conduite.

De part et d'autre du corps 101, s'étendent deux branches de préhension 102a, 102b, orientées sensiblement l'une par rapport à l'autre en V. Chaque branche comporte, dans sa partie supérieure, c'est-à-dire dans sa partie destinée à se trouver vers le haut du volant 100 lorsque celui est en place à l'intérieur d'un véhicule, des moyens de freinage 103a, 103b respectifs adaptés pour qu'une pression exercée par le conducteur permette de freiner le véhicule.

Le fait de prévoir que les moyens de freinage 103 soient actionnés en poussant sur le volant 100, reproduit la sensation selon laquelle le conducteur a tendance à être plaqué contre son volant 100, lors d'un freinage.

D'autre part, deux palettes d'accélération symétriques 104a, 104b, c'est-à-dire deux actionneurs de forme sensiblement plate, sont fixées à l'arrière du corps 101, et s'étendent ente ce corps et les branches respectives 102a, 102b.

Le terme arrière s'entend par rapport à un conducteur situé en position de conduite et se rapporte à des parties du volant 100 non visibles pour le conducteur.

Ces palettes 104a, 104b sont adaptées pour qu'une traction vers le conducteur permette de faire accélérer le véhicule. Le fait de prévoir que les palettes d'accélération soient actionnées par traction vers le conducteur, reproduit la sensation selon laquelle le conducteur a tendance à s'éloigner du volant pour être plaqué au fond de son siège, lors d'un freinage.

Avantageusement, le volant 100 est configuré de sorte que lesdites branches de préhension 102, la ou les palettes 104 et les moyens de freinage 103 sont disposés de manière que lorsque le conducteur tient lesdites branches 102 avec ses mains, il ait au moins l'un de ses pouces qui vienne se positionner naturellement sur ledit bouton, et ses autres doigts sur la face arrière de ladite palette.

Les moyens de freinage 103 et les palettes d'accélération 104 sont destinés à être reliés par un faisceau de câbles électriques à une unité de commande électronique du véhicule automobile sur lequel ce volant 100 est destiné à être installé.

Un tel volant 100 ne peut présenter un déplacement angulaire que relativement faible de part et d'autre de sa position neutre (correspondant à l'alignement des roues du véhicule dans l'axe de celui-ci).: le débattement angulaire d'un tel volant ne peut en effet dépasser une certaine limite, située typiquement entre 45° et 90° de chaque côté de sa position neutre (correspondant aux roues directrices droites), faute de quoi le conducteur pourra difficilement accéder aux commandes d'accélération et de freinage.

Dans une variante de réalisation non limitative, tant que le volant 100 est situé entre ses butées droite et gauche (autorisant donc une rotation de l'ordre de 60° du volant de part et d'autre de sa position neutre), on prévoit que la rotation correspondante des roues directrices du véhicule soit située dans une plage de 0 à 15°, et de préférence de 0 à 10°, par rapport à la position d'alignement de ces roues avec l'axe du véhicule.

Ceci permet d'éviter qu'une mise en rotation du volant 100 entraîne une mise en rotation trop importante des roues 2, 3, ce qui pourrait provoquer des embardées dangereuses du véhicule, notamment lorsque celui-ci roule à grande vitesse.

Lorsqu'on souhaite dépasser cette valeur prédéterminée d'angle de rotation des roues directrices 2,3, notamment pour manoeuvrer le véhicule en vue de son stationnement, on maintient le volant contre sa butée droite ou gauche, et tant que ce maintien est effectué, les roues directrices continuent de pivoter progressivement au-delà de ladite valeur d'angle prédéterminée.

On peut prévoir, également, que cette commande d'angle de rotation supplémentaire obtenue par maintien du volant contre l'une de ces butées, ne soit permise que lorsque le véhicule circule en dessous d'une vitesse prédéterminée, voire même uniquement lorsque le véhicule est à l'arrêt.

Avantageusement, la plage angulaire de fonctionnement du volant limitée et son ergonomie permettent de ne jamais lâcher le volant 100 mêmes lors de manoeuvres à faible vitesse, ce qui offre un moyen de prévention contre la perte de contrôle du véhicule efficace.

Toutes les commandes sont à portée de main pour une réactivité optimum.

Par ailleurs, comme illustré sur la figure 2, l'électronique de commande du système de commande de direction découplée selon la présente invention comprend une unité de commande électronique centralisée 1 adaptée pour piloter les différents actionneurs 212,213, du système 200 de commande de braquage des roues 2, 3 directrices et le moteur d'assistance 301 du système 300 de restitution d'effort au volant 100.

Plus particulièrement, unte telle unité de commande électronique 1 comprend les moyens matériels et logiciels permettant de mettre en oeuvre les deux systèmes respectifs de commande de braquage 200 et de restitution d'effort 300 au volant précités.

Elle peut comprendre notamment des moyens de calculs et/ou des moyens d'estimation et/ou des modèles de référence et/ou des cartographies permettant de caractériser la direction du véhicule automobile dans le système de commande de direction selon la présente invention.

Comme illustré sur la figure 2 par les flèches se dirigeant vers l'unité de commande 1, une telle unité de commande 1 reçoit différents signaux électriques de moyens de détermination de valeur de différents paramètres illustrant l'état de la direction du véhicule automobile pour les transformer en commande des actionneurs 212,213 et du moteur d'assistance 301 du volant 100 par l'intermédiaire de stratégies de commande qui seront décrites plus loin.

Ainsi, elle peut recevoir notamment :

- des données sur la position angulaire du volant 100;
- des données sur la vitesse moyenne du véhicule ;
- des données sur les forces exercés sur les vérins 215 respectifs des actionneurs 212,213 dédié, chacun, à une roue directrice 2,3 ;
- des données sur la position desdits vérins 215 d'entrainement des roues.

Comme illustré sur la figure 2 par les flèches sortant de l'unité de commande 1, à partir de ces données issues des capteurs précités et/ou d'estimateurs notamment, l'unité de commande électronique 1 pilote, selon deux stratégies de commande décrites ci-après, le moteur d'assistance 301 du volant 100 en commandant une consigne de couple d'effort à restituer au volant 100 et , également, le braquage des roues directrices 2,3 en commandant une consigne en position des vérins 215 d'entrainement des roues 2, 3.

Il est à noter que dans une variante de réalisation, le système 200 de commande de braquage des roues et le système 300 de restitution d'effort au volant peuvent être commandés par des unités de commande indépendantes dédiées et/ou par plusieurs unités de commande électronique.

Le système 200 de commande de braquage est commandé par l'unité de commande électronique 1 notamment grâce à une stratégie de commande destinée à déterminer une consigne de position pour chacun des vérins orientant les roues directrices 2,3 en fonction, notamment, de la position angulaire du volant 100 par le conducteur et de la vitesse du véhicule dont les différentes étapes sont les suivantes.

Ainsi, l'unité de commande électronique 1 reçoit, en entrée :

- une valeur de la vitesse moyenne $_\upsilon$ du véhicule. Cette valeur peut être mesurées à partir d'un signal électrique issu d'un capteur de vitesse ou une valeur estimée ou calculée ;
- une valeur de la variation angulaire $\theta_\upsilon$ du volant exercée par le conducteur. Cette valeur peut être mesurée à partir d'un signal électrique issu d'un capteur de position angulaire du moteur électrique lié au volant ou une valeur estimée ou calculée;

L'unité de commande électronique 1 détermine, en sortie, les consignes à chacun des moteurs des vérins 125 réalisant le braquage des roues et, plus particulièrement , les consignes de position $X_{consG}$ et $X_{consG}$ pour chacun des vérins, consignes devant être appliquées par le système 200 de commande de braquage des roues et notamment par le variateur 219 correspondant.

Avantageusement, on peut ainsi piloter l'orientation des roues 2,3 individuellement, indépendamment chacune l'une de l'autre.

La stratégie de commande mise en oeuvre par le système de commande de braquage des roues et, plus particulièrement, par l'unité de contrôle électronique 1 est la suivante.

Dans un premier temps, on détermine un angle de braquage maximal moyen $\alpha_{max}$ pouvant êre appliqué aux roues 2,3 directrices du véhicule avant renversement du véhicule en fonction de la géométrie du véhicule et d'une valeur de la vitesse de ce dernier, reçue par l'unité de contrôle électronique 1.

Dans une étape préalable à cette détermination, on établit la loi de renversement du véhicule comme limite de fonctionnement, celle-ci pouvant être paramétrée car lié à la géométrie du véhicule.

On détermine ainsi un angle limite de braquage des roues pour lequel il y a renversement du véhicule $\alpha_{lim}$.

Un tel angle $\alpha_{lim}$ est défini selon la relation (1) suivante :

$$\alpha_{\lim} \equiv \arcsin\left(\frac{g \times E \times L}{2 \times Z_G \times \upsilon^2}\right) \qquad (1)$$

Dans laquelle : - $g$ est la gravité

- $E$ est la largeur de voie du véhicule
- $L$ est l'empattement du véhicule
- $Z_G$ est le centre de gravité du véhicule

Après determination de cet angle limite de braquage des roues $\alpha_{lim}$, on en déduit un angle de braquage maximal moyen $\alpha_{max}$ défini selon la relation (2) suivante :

$$\alpha_{\max} \equiv \frac{\theta_\upsilon}{60} \times \alpha_{\lim} \qquad (2)$$

L'angle de braquage maximal moyen $\alpha_{max}$, qui est l'angle avant renversement du véhicule, est égal à une fraction du produit de l'angle limite de braquage des roues $\alpha_{lim}$ et de l'angle de volant $\theta_\upsilon$ choisi par le conducteur.

Plus particulièrement, l'angle limite de braquage des roues $\alpha_{lim}$ est pondéré par un pourcentage de rotation du volant 100 sur sa plage angulaire pour obtenir l'angle de braquage maximal moyen $\alpha_{max}$.

L'angle limite de braquage des roues $\alpha_{lim}$ est pondéré par le rapport entre la position angulaire du volant $\theta_\upsilon$ et la valeur maximale d'angle que peut prendre le volant.

Dans l'exemple non limitatif indiqué dans la formule (2), cette valeur maximale d'angle que peut prendre le volant est de 60 degrés, comme indiqué précedemment en lien avec la descirption du'un mode de réalisation du volant 100.

Avantageusement, l'angle de braquage maximal moyen $\alpha_{max}$ généré qui sera appliqué indirectement aux roues directrices aura été contrôlé par l'électronique de commande, de façon transparente pour le conducteur, en intégrant pour sa détermination les limites de reversement du véhicule à savoir sa stabilité.

On répond ainsi facilement et rapidement à la volonté du conducteur tout en assurant une stabilité au véhicule dans la mesure où on agit directement sur l'angle de braquage des roues en fonction des limites de stabilité du véhicule et que l'on ne peut braquer les roues 2,3 d'un angle plus important que l'angle auquel le véhicule se retournerait.

Par ailleurs, un tel angle de braquage maximal moyen $\alpha_{max}$ répond à la nécessité d'orienter les roues 2,3 selon des angles relativement importants lorsque le véhicule circule lentement ou est à l'arrêt, notamment pour des manoeuvres pour se garer, et des angles de braquage plus mesurés lorsque le véhicule circule plus rapidement.

Dans une étape ultérieure, les roues directrices 2,3 étant indépendantes les unes des autres et commandées par un actionneur 212,213 dédié, on extrait de la détermination de l'angle de braquage maximal moyen $\alpha_{max}$ des consignes d'angles de braquage propres à chacune des roues directrices, à savoir dans notre exemple les deux consignes d'angles de braquage $\alpha_D$ et $\alpha_G$ des deux roues 2,3 directrices respectivement droite et gauche du train arrière.

Dans une variante de réalisation de la présente invention, l'unité de commande électronique 1 comprend des moyens adaptés pour déterminer un braquage différentiel entre les deux roues directrices d'un train selon qu'il s'agit de la roue intérieure ou de la roue extérieure.

Une telle détermination d'un braquage différentiel des roues 2,3 permet avantageusement de contrôler tout dérapage du véhicule et de diminuer ainsi les glissements des roues 2,3 dans un virage. On corrige également ainsi le comportement dynamique du véhicule.

Dans un exemple non limitatif de la présente invention, on peut déterminer deux consignes d'angle de braquage $\alpha_D$ et $\alpha_G$ propres à chacune des roues directrices selon l'Epure de Jeantaud, qui consiste à connaitre pour un rayon de braquage donné l'angle de chacune des roues.

Ainsi, la consigne d'angle de braquage $\alpha_D$ peut être définie selon la relation (3) suivante :

$$\alpha_D \equiv \arctan\left(\frac{1}{\left(\dfrac{1}{\tan\alpha} - \dfrac{E}{2\times L}\right)}\right) \qquad (3)$$

Concernant la consigne d'angle de braquage $\alpha_G$, elle peut être définie selon la relation (4) suivante :

$$\alpha_G \equiv \arctan\left(\frac{1}{\left(\dfrac{1}{\tan\alpha} + \dfrac{E}{2\times L}\right)}\right) \qquad (4)$$

A l'étape suivante, l'unité de commande électronique 1 déduit des consignes d'angle de braquage différentiel $\alpha_G$ et $\alpha_D$, des consignes de position $X_{consG}$ et $X_{consD}$ respectives des vérins 215 entrainant la roue directrice 2,3 correspondante.

La relation entre l'angle de braquage de chaque roue 2,3 et la position du vérin 215 correspondant est déterminée grâce à la géométrie du train de roues concerné du véhicule et la cinématique liée à cette géométrie.

Les consignes de position $X_{consG}$ et $X_{consD}$ des vérins 215 respectifs des roues gauche et droite sont ainsi définies, respectivement, selon les relations de type polynôme du troisième degré respectives (5) et (6) suivantes :

$$X_{consG} \equiv -0.0001 \times \alpha_G{}^3 + 0.0019 \times \alpha_G{}^2 + 2.1919 \times \alpha_G + 84.5 \quad (5)$$

$$X_{consD} \equiv 0.0001 \times \alpha_D{}^3 + 0.0019 \times \alpha_D{}^2 - 2.1919 \times \alpha_D + 84.5 \quad (6)$$

A partir de telles consignes, l'unité de commande électronique 1 pilote les deux vérins 215 en position.

Plus précisément, l'unité de commande électronique 1 transmet au variateur 219 du moteur 216 de l'actionneur 212,213 correspondant la consigne de position $X_{consG}$ et $X_{consD}$ du vérin 215 adaptée.

Le variateur 219 réalise alors l'asservissement du moteur 219. Il compare la consigne de position du vérin 215 reçue $X_{consG}$, $X_{consD}$ convertie en consigne de position du moteur 216 à la position effective de ce dernier, pouvant être reçue du capteur 217.

Le variateur 219 ajuste alors la tension aux bornes du moteur 216 en fonction de la différence entre la consigne de position du moteur 216 à la position effective de ce dernier pour que le vérin 215 correspondant soit déplacé selon la consigne en position déterminée $X_{consc}$, $X_{consD}$ et, en conséquence, que la roue correspondante 2,3 soit orientée selon la consigne de braquage $\alpha_G$ et $\alpha_D$ déterminée.

Pour alléger l'ensemble du traitement susmentionné, et le dimensionnement de l'unité de commande électronique 1, des cartographies et/ou modèles se présentant comme des tables de paramètres peuvent être utilisés.

Ainsi, une variante de réalisation prévoit d'utiliser des tables de paramètres référençant l'angle de braquage maximal moyen en fonction de la vitesse du véhicule et de l'angle au volant 100 exercé par le conducteur.

Dans une seconde variante de réalisation, on peut également prévoir d'utiliser des tables de paramètres référençant l'angle de braquage maximal moyen en fonction de la position des vérins 215 ou encore du braquage différentiel des roues directrices 2,3.

Il est à noter que les deux variantes susmentionnées ne sont pas exclusives l'une de l'autre.

Par ailleurs, il convient de noter qu'une telle stratégie de commande de braquage des roues directrices 2,3 et, notamment la commande indépendante des roues directrices 2,3 permet d'obtenir des géométries de train parfaites quelle que soit les conditions et la vitesse.

Par ailleurs, il convient de noter que, dans une variante de réalisation de la présente invention, une telle stratégie de commande de braquage des roues directrices ne peut s'appliquer que dans une gamme de vitesse de véhicule donnée et, notamment en dessous d'une vitesse particulière, ceci afin que de maintenir un comportement de loi de commande non déstabilisant par rapport à un véhicule standard à haute vitesse.

Ainsi, on détermine une valeur seuil supérieure $\upsilon_{seuil\,sup}$ de vitesse moyenne de véhicule au delà de laquelle cette stratégie de commande ne s'applique pas.

On détermine également une valeur seuil inférieure $\upsilon_{seuil\,inf}$ de vitesse moyenne de véhicule en dessous de laquelle cette stratégie de commande ne s'applique pas.

Avant toute commande de braquage des roues 2,3 en fonction de la variation angulaire du volant 100 décidé par le conducteur, l'unité de commande électronique 1 compare le signal de la vitesse moyenne u du véhicule qu'elle reçoit avec la valeur supérieure $\upsilon_{seuil\,sup}$ de vitesse et la vitesse seuil inférieure $\upsilon_{seuil\,inf}$

Si la valeur seuil $\upsilon_{seuil\,sup}$ est supérieure à $\upsilon$, la stratégie de commande des roues susmentionnée n'est pas appliquée par l'unité de commande électronique 1.

A cette valeur de vitesse $\upsilon_{seuil\,sup}$ et au-delà, la loi de renversement du véhicule croise la loi de fonctionnement d'une direction classique. Cela signifie que pour un même angle au volant donné, les roues 2,3 du système de commande de direction découplée auront un angle de braquage identique à celui donné par d'une direction classique. Il n'est plus nécessaire de suivre la loi de renversement du véhicule.

Si la valeur seuil $\upsilon_{seuil\,inf}$ est supérieure à $\upsilon$, la stratégie de commande du braquage des roues 2,3 susmentionnée n'est pas appliquée par l'unité de commande électronique 1.

Dans ce cas, la position angulaire du volant 100 est maximale, en butée et l'angle de braquage appliqué à chacune des roues 2,3 sera lui aussi à sa valeur maximale.

Dans un exemple non limitatif de la présente invention, la valeur seuil supérieure $\upsilon_{seuil\,sup}$ de vitesse est de l'ordre de 60km/h en raison des angles de braquages liés au renversement du véhicule et la valeur seuil inférieure $\upsilon_{seuil\,inf}$ est de l'ordre de 25 km/h.

Par ailleurs, la stratégie de commande susmentionnée s'applique avantageusement au volant 100 tel que celui décrit en figure 1 pour lequel le débattement angulaire avant butée est limité, sans risque pour le conducteur d'une mauvaise maitrise de son véhicule.

Pour rappel, dans ce type de volant, le débattement angulaire est limité préférentiellement de $\pm$ 60 degrés, contrairement à un volant lié à une direction classique dont la plage de débattement est de 540 degrés.

Une telle loi de commande de braquage des roues permet de définir une relation entre l'angle du volant limité sur une certaine plage angulaire et l'angle de braquage des roues 2,3 sans risque pour le conducteur.

En effet, le handicap mécanique de la plage angulaire réduite du volant 100 peut être comblé par l'utilisation de la loi de renversement du véhicule.

Concernant le système 300 de restitution d'effort destiné à reproduire au conducteur par l'intermédiaire du volant 100 un effort qu'il ressentirait s'il conduisait une voiture avec une direction non découplée, il repose sur la détermination d'une consigne de couple à appliquer au niveau du volant 100 en fonction notamment de la vitesse du véhicule et de la variation angulaire du volant 100.

Ainsi, l'unité de commande électronique 1 reçoit, en entrée :

- une valeur de la vitesse moyenne u du véhicule. Cette valeur peut être mesurées à partir d'un signal électrique issu d'un capteur de vitesse ou une valeur estimée/calculée ;
- Des valeurs de deux efforts $F_D$ et $F_G$ s'exerçant respectivement sur chacune des roues 2,3 directrices d'un train et via les biellettes de commande d'orientation 204, 205 sur les deux vérins 215 correspondants. Ces valeurs peuvent être mesurées à partir de signaux électriques issus des capteurs de force 218 montés sur les vérins 215 correspondants ou estimées ou calculées ;

- Une valeur de la variation angulaire $\theta_\upsilon$ du volant 100 exercée par le conducteur. Cette valeur peut être mesurée à partir d'un signal électrique issu d'un capteur 306 de position angulaire du volant 100 ou une valeur estimée/calculée ;
- Des valeurs de position des deux vérins 215 respectifs des deux roues directrices 2,3 d'un train. Ces valeurs peuvent être mesurées à partir de signaux électriques issus des capteurs 217 liés aux moteurs 216 des vérins 215 ou une valeur estimée/calculée ;

L'unité de commande électronique 1 permet d'obtenir, en sortie, une consigne de couple à restituer au volant 100 fourni par le système de restitution d'effort au conducteur pour aider les mouvements exercés manuellement par le conducteur sur le volant 100.

La stratégie de commande mise en oeuvre par le système 300 de restitution d'effort et, plus particulièrement, par l'unité de contrôle électronique 1 est la suivante.

Dans une première étape, on détermine une valeur effective $X_{eff\,D}$ et $X_{eff\,G}$ de position de chaque vérin 215 dédié à une roue directrice, grâce notamment aux capteurs 217 adaptés sur le moteur 216 de chaque vérin 215.

On acquiert des valeurs des consignes de position $X_{consG}$ et $X_{consD}$ respectives de chaque vérin 212 déterminées par le calculateur.

Ces consignes peuvent être déterminées selon les relations (5) et (6) décrites précédemment en relation avec la description du système de commande de braquage ou par tout autre moyen adapté.

A l'étape suivante, on détermine l'erreur de position ε définie par la différence entre la valeur de position effective $X_{effD}$, $X_{effG}$ et la consigne correspondante $X_{consD}$, $X_{consG}$.

Dans une étape ultérieure, l'unité de commande électronique 1 détermine une consigne de couple $C_{cons}$ à restituer au volant.

Une telle consigne de couple $C_{cons}$ est définie selon la relation (7) suivante :

$$C_{cons} \equiv K1\left(A \times v^2 + Bv + C\right) \times \left(F_{efforts}\right) + \left[\pm K2\left(K3 \times \|\varepsilon\|\right)^{\left(-K4 \times v + 2\right)}\right] \qquad (7)$$

Dans laquelle : - $K1$ est une constante de réglage de la sensibilité caractéristique du ressenti de la route (en m),

- A, B et C sont des constantes de réglage à affiner en fonction des limites de couples à restituer souhaitées
- K2, K3 et K4 sont des constantes de réglage de la sensibilité caractéristique de l'erreur de position d'un vérin

On remarque que plus les efforts extérieurs sont importants, plus l'effort d'assitance appliqué au volant pour aider le conducteur l'est également.

Plus particulièrement, en référence à la relation (7), la consigne de couple $C_{cons}$ à restituer au volant 100 est fonction respectivement d'une première consigne de couple C1 à restituer au volant 100 définie en fonction des efforts extérieurs $F_{efforts}$ exercés sur le véhicule et de la vitesse du véhicule et d'une seconde consigne de couple C2 à restituer au volant 100 définie en fonction de la vitesse du véhicule et de la commande du conducteur.

Plus précisément, la consigne de couple $C_{cons}$ est définie comme la somme des première et seconde consignes de couples C1 et C2.

Concernant la première consigne de couple C1, elle prend en compte la vitesse et les efforts $F_{efforts}$ sur les roues 2,3,et plus particulièrement les efforts sur chacune des roues 2,3 $F_D$ et $F_G$, ceci afin de traduire dans la consigne de couple C$_{cons}$ , le ressenti des virages au volant, grandeur significative pour un retour de force au volant 100 dans la mesure où c'est au moment d'un virage que le ressenti d'un effort, variant en fonction de la vitesse, se fait , l'inertie de la voiture créant une réaction de la route sur les deux roues 2,3.

Plus précisément, la première consigne de couple C1 est définie dans une relation parabolique avec la vitesse υ, ceci afin de permettre un paramétrage simple à mettre en oeuvre lors d'essais réels.

De plus, on pondère de façon réglable par la présence de la constante K1 les efforts F s'exerçant sur chacune des roues 2,3 sans modifier l'allure du comportement en fonction de la vitesse.

A haute vitesse, la première consigne de couple C1 retranscrite au volant 100 est plus importante et tend à ramener le volant 100 à sa position neutre.

A basse vitesse, un faible couple de volant 100 est apporté pour se rapprocher de la direction mécanique classique.

Dans une variante de réalisation de la présente invention, on détermine en amont des seuils de valeurs pour la première consigne de couple 1 à ne pas dépasser en fonction de la vitesse du véhicule.

Ainsi, dans un exemple non limitatif de la présente invention, on limite à 2N maximum la première consigne de couple C1 à faibles vitesses et à 4N la première consigne de couple C1 pour des hautes vitesses.

Il est à noter qu'une étape préalable à la détermination de la consigne de couple C$_{cons}$ peut être envisagée pour filtrer les efforts extérieurs $F_D$ et $F_G$ auxquels sont soumis les vérins 215.

Concernant la seconde consigne de couple C2 définie dans la seconde partie de la relation (7), elle prend en considération la vitesse du véhicule et la commande du conducteur et plus particulièrement l'erreur de position ε des vérins 215 de braquage des roues 2,3.

La prise en considération de l'erreur de positionnement des roues 2,3 par rapport aux consignes permet de prendre en considération le retard que peut prendre le vérin 215 sur la consigne de braquage des roues 2,3 du à l'inertie du système lorsqu'un conducteur tourne le volant 100 brusquement ou rapidement.

Par ailleurs, la pondération de l'erreur de position ε des vérins 215 par la vitesse dans une relation parabolique permet de respecter le fait que plus la vitesse est élevée plus une direction classique se rigidifie .

Les différentes constantes de réglage définies dans la seconde partie de la relation (7), sont à determiner et à régler en fonction des consignes de couple maximales, l'erreur maximale et la vitesse maximale déterminées par le système ou réglées par le conducteur. Elles peuvent être ajustées ou réglées lors d'essais réels.

Dans un exemple non limitatif de la présente invention, la seconde consigne de couple C2 est limitée par une valeur seuil maximale de l'ordre de 6 N.m, l'erreur de position des vérins 215 est limitée par des valeurs seuil minimale et maximale de l'ordre de ±5mm et la vitesse est limitée par des valeurs seuil minimale et maximale de 0 et 100 km/h.

Dans une variante de réalisation, si ces grandeurs dépassent leurs bornes prédéterminées, elles sont saturées à ces bornes, ceci afin de contrôler tous les cas particuliers qui pourraient survenir.

Grace à la détermination d'une telle seconde consigne de couple C2, à basse vitesse, les actionneurs peuvent couvrir toute la plage de braquage des roues 2,3 et donc solliciter un maximum de débattement des roues 2,3.

De plus, à basse vitesse, le système tolère une erreur en positiond es vérins 215 plus importante pour une consigne de couple C2 identique.

Dans une étape ultérieure, l'unité de commande électronique 1 peut piloter l'ensemble motoréducteur 301,302 lié au volant en fonction de cette consigne de couple C$_{cons}$ de manière à reproduire les efforts que ressentirait un conducteur d'un véhicule équipé d'un système de direction non découplée.

Plus particulièrement, l'unité de commande électronique 1 fournit au variateur 305 couplé à l'ensemble moto réducteur 301,302 la valeur de la consigne de couple C$_{cons}$ à appliquer au volant 100.

En parallèle, il lui fournit une valeur seuil de couple C$_{seuil}$ à restituer, préalablement saisie dans l'unité de commande 1.

Le variateur 305 teste si la consigne de couple C$_{cons}$ est inférieure à la valeur seuil du couple C$_{seuil}$.

Si tel est le cas, il compare la consigne de couple transformée en consigne de position du moteur d'assistance 301 et la position effective de ce dernier et à partir de tels signaux, il pilote le moteur d'assistance 301 de telle sorte que ce moteur fournit au volant 100 la consigne de couple C$_{cons}$.

Si non, le variateur 305 compare la valeur seuil du couple d'effort C$_{seui}$ transformée en consigne de position du moteur d'assistance 301 et la position effective du moteur et à partir de tels signaux, il pilote le moteur 301 de telle sorte que ce moteur fournit au volant 100 la valeur seuil C$_{seuil}$ du couple. Dans ce cas, le système 300 de restitution d'effort restitue le couple maximal C$_{seuil}$ au volant 100.

Dans un exemple non limitatif de la présente invention, le couple maximal C$_{seuil}$ est de l'ordre de 10 Nm.

Une telle stratégie de commande pour déterminer un couple à restituer à un volant dans un système de commande de direction découplée offre l'avantage de prendre en considération les efforts extérieurs réels agissant respectivement sur les deux roues 2,3 directrices indépendantes en association avec des paramètres liés à la conduite même du véhicule que ce soit la vitesse du véhicule ou le braquage des roues par l'intermédiaire de l'erreur de position éventuelle des vérins 215 commandant les roues 2,3.

Une telle stratégie de commande pour déterminer un couple à restituer à un volant dans un système de commande de direction découplée permet d'optimiser confort et sécurité de conduite pour le conducteur.

En effet, on retranscrit les sensations de conduite que l'on souhaite comme les efforts de la route qui s'appliquent aux roues 2,3 dans les virages et la vitesse qui créent des efforts dans le volant 100 comme dans une direction mécanique classique et, à la fois, filtrer ou supprimer les aspects que l'on considère comme nuisibles ou incorfortables pour la conduite, comme, par exemple, les vibrations du moteur et les imperfections de la route.

De plus, sont retranscrites au conducteur, des informations notamment sur la dynamique du véhicule pour l'aider à la conduite du véhicule dont la direction est découplée.

La restitution du ressenti des virages et de la vitesse par l'intermédiaire d'une première consigne de couple C1 au volant 100 est indispensable pour ne pas destabiliser un conducteur non habitué à un système de commande de direction découplée et d'autre part, offre la garantie d'une meilleure maitrise du véhicule dans des conditions d'adhérence limitées.

Dans une variante de réalisation, un tel système 300 de restitution d'effort peut être activé seulement dans certaines conditions de roulage du véhicule ou selon une condition sur la vitesse de véhicule, comme précédemment décrit.

Il est à noter que pour alléger l'ensemble du traitement pour déterminer la consigne de couple à restituer susmentionnée, et le dimensionnement de l'unité de commande électronique 1, des cartographies et/ou modèles se présentant comme des tables de paramètres peuvent être utilisés.

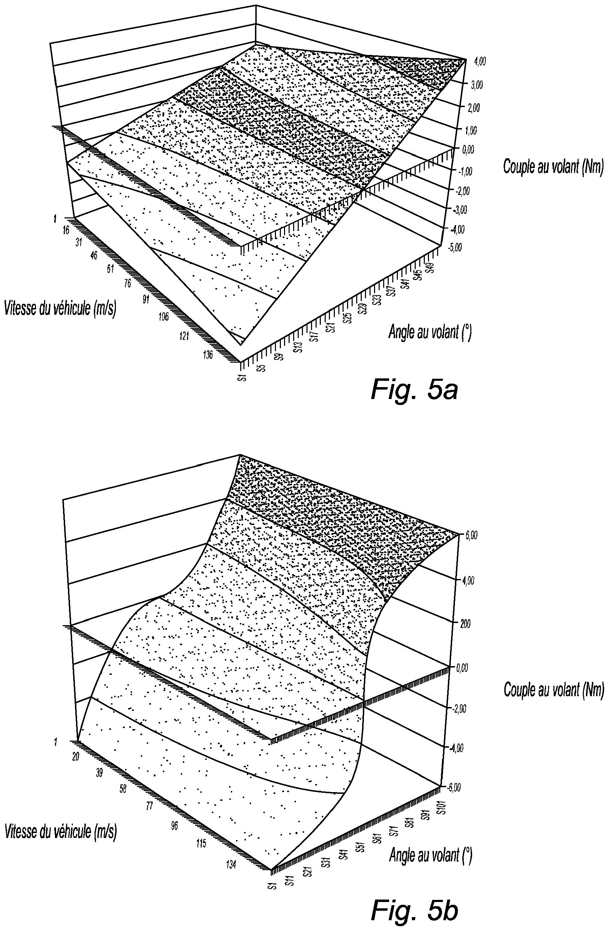

Ainsi, une variante de réalisation, illustrée sur les figures 5a et 5b, prévoit d'utiliser des cartographies référençant un couple à appliquer au volant en fonction de l'angle au volant exercé par le conducteur et la vitesse du véhicule pour chacune des deux parties de l'équation 7 liée respectivement aux efforts extérieurs agissant sur les roues 2,3 et à la position des vérins 215 de braquage des roues 2,3.

Ainsi, la consigne de couple $C_{cons}$ sera la somme des deux couples issus des deux cartographies illustrées sur les figures 5a et 5b.

Bien évidemment, l'invention ne se limite pas aux seules formes de réalisation du système de commande de direction découplée décrites ci-dessus à titre d'exemples mais elle embrasse au contraire toutes les variantes possibles.

Ainsi, un tel système de commande de direction peut etre applicable à tout orgnae de commande de véhicule.

Il peut également être appliqué à l'un et/ou l'autre des deux trains avant et arrière d'un essieu de véhicule.

## Revendications

**1.** Système de commande de direction découplée d'un véhicule automobile comprenant :

- un système (300) de restitution d'effort sur un organe de commande de direction (100) du véhicule comprenant au moins un moteur d'assistance (301) apte à restituer un couple à l'organe de commande de direction,
- des moyens de détermination d'une commande d'un conducteur du véhicule,
- des moyens de détermination d'une vitesse du véhicule et,
- des moyens de détermination d'une consigne de couple à restituer à l'organe de commande de direction (100), **caractérisé en ce qu'**il comprend, en outre, des moyens pour déterminer un premier couple à restituer à l'organe de commande de direction (100) en fonction d'efforts extérieurs exercés sur le véhicule et de la vitesse du véhicule et des moyens pour déterminer un second couple à restituer à l'organe de commande de direction (100) en fonction de la vitesse du véhicule et de la commande du conducteur, la consigne de couple à restituer à l'organe de commande de direction (100) étant fonction des premiers et second couples à restituer à l'organe de commande de direction (100).

**2.** Système selon la revendication 1 **caractérisé en ce qu'**il comprend, en outre, un système (200) de commande de braquage de roues directrices (2,3) du véhicule doté d'un actionneur (212,213) individuel par roue directrice (2,3).

**3.** Système selon la revendication 2 **caractérisé en ce que** les moyens pour déterminer un premier couple à restituer à l'organe de commande de direction en fonction d'efforts extérieurs appliqués sur le véhicule et de la vitesse du véhicule comprennent des moyens de détermination d'efforts extérieurs exercés sur chaque roue directrice (2,3), efforts propres à chacune desdites roues (2,3).

**4.** Système selon l'une des revendications 2 à 3 **caractérisé en ce que** les moyens pour déterminer un second couple à restituer à l'organe de commande de direction en fonction de la vitesse du véhicule et de la commande du conducteur comprennent des moyens de détermination d'une consigne de position propre à chacun des actionneurs (212,213) dédié à une roue directrice (2,3) et des moyens de comparaison desdites consignes de position avec des positions effectives de moteurs (216) de chaque actionneur (212,213).

5. Système selon l'une des revendications 2 à 4 **caractérisé en ce que** le système (300) de restitution d'effort sur l'organe de commande de direction (100) du véhicule comprend des moyens d'asservissement (305) du moteur d'assistance (301) dudit organe (100) en fonction de la consigne de couple à restituer à l'organe de commande de direction (100).

6. Système selon l'une des revendications 1 à 5 **caractérisé en ce qu'**il comprend des moyens adaptés pour restituer une valeur seuil de couple prédéterminée à l'organe de commande de direction (100) lorsque la consigne de couple à restituer est supérieure à ladite valeur seuil de couple.

7. Système selon l'une des revendications précédentes **caractérisé en ce qu'**il comprend un organe de commande du véhicule (100) comprenant :

   - un corps central (101),
   - deux branches de préhension (102a, 102b) reliées à ce corps central, disposées de part et d'autre de celui-ci,
   - au moins une palette d'accélération (104a, 104b) reliée à la face arrière dudit corps et s'étendant entre ce corps et l'une desdites branches, cette palette étant telle qu'une traction vers le conducteur permette de faire accélérer le véhicule, et
   - au moins un moyen de freinage (103a, 103b) disposé sur la face avant d'au moins l'une desdites branches, ce moyen de freinage étant tel qu'une pression exercée par le conducteur permette de freiner le véhicule, lesdites branches de préhension (102a, 102b), ladite palette (104a, 104b) et ledit moyen de freinage (103a, 103b) étant disposés de manière que lorsque le conducteur tient lesdites branches avec ses mains, il ait au moins l'un de ses pouces qui vienne se positionner naturellement sur ledit moyen de freinage (103a, 103b), et ses autres doigts sur la face arrière de ladite palette (104a, 104b).

8. Procédé de mise en oeuvre d'un système de commande de direction découplée selon l'une des revendications 1 à 7 dans lequel :

   - on détermine un premier couple à restituer à l'organe de commande de direction en fonction d'efforts extérieurs appliqués sur le véhicule et de la vitesse du véhicule,
   - on détermine un second couple à restituer à l'organe de commande de direction en fonction de la vitesse du véhicule et de la commande du conducteur,
   - on génère une consigne de couple à restituer à l'organe de commande de direction (100) fonction des premiers et seconds couples à restituer à l'organe de commande de direction (100).

9. Procédé selon la revendication 8 comprenant une étape dans laquelle on choisit une valeur de couple seuil à restituer à l'organe de commande de direction, on compare ladite valeur seuil à la valeur de la consigne de couple générée et si la valeur de la consigne de couple générée est supérieure à la valeur de couple seuil, on restitue au moteur d'assistance (305) le couple seuil.

10. Véhicule automobile comprenant au moins une roue directrice et un système de commande de direction découplée selon l'une quelconques des revendications 1 à 7.

*Fig. 1*

*Fig. 2*

Fig. 3a

Fig. 3b

Fig. 4a

Fig. 4b

Fig. 5a

Fig. 5b

Europäisches
Patentamt

European
Patent Office

Office européen
des brevets

# RAPPORT DE RECHERCHE EUROPEENNE

Numéro de la demande

EP 12 15 7787

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/080016 A1 (KASAHARA TOSHIAKI [JP] ET AL) 13 avril 2006 (2006-04-13) * alinéa [0033] - alinéa [0090]; figures 1-25 * | 1-10 | INV. B62D5/00 |
| A | DE 10 2007 058143 A1 (CONTINENTAL TEVES AG & CO OHG [DE]) 5 juin 2008 (2008-06-05) * alinéa [0022] - alinéa [0069]; figures 1-3 * | 2-6,9 | |
| A | EP 1 400 429 A1 (CALSONIC KANSEI CORP [JP]) 24 mars 2004 (2004-03-24) * colonne 37 - colonne 61; figures 1-27 * | 7 | |

DOMAINES TECHNIQUES RECHERCHES (IPC)

B62D

Le présent rapport a été établi pour toutes les revendications

| Lieu de la recherche | Date d'achèvement de la recherche | Examinateur |
|---|---|---|
| La Haye | 11 avril 2012 | Kamara, Amadou |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 15 7787

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2012

| Document brevet cité au rapport de recherche | Date de publication | Membre(s) de la famille de brevet(s) | Date de publication |
|---|---|---|---|
| US 2006080016 A1 | 13-04-2006 | CN 1769122 A<br>DE 102005049042 A1<br>KR 20060052206 A<br>US 2006080016 A1 | 10-05-2006<br>20-04-2006<br>19-05-2006<br>13-04-2006 |
| DE 102007058143 A1 | 05-06-2008 | AT 481290 T<br>DE 102007058143 A1<br>EP 2099670 A1<br>JP 2010511559 A<br>US 2010057291 A1<br>WO 2008068200 A1 | 15-10-2010<br>05-06-2008<br>16-09-2009<br>15-04-2010<br>04-03-2010<br>12-06-2008 |
| EP 1400429 A1 | 24-03-2004 | EP 1400429 A1<br>US 2004108161 A1 | 24-03-2004<br>10-06-2004 |

EPO FORM P0460

Pour tout renseignement concernant cette annexe : voir Journal Officiel de l'Office européen des brevets, No.12/82